# EUROPEAN PATENT SPECIFICATION

(11) **EP 0 586 752 B1**
(45) Date of publication and mention of the grant of the patent: **08.03.1995**
(21) Application number: 92204078.7
(22) Date of filing: 23.12.1992
(51) Int. Cl.: B65G 53/14

(54) **Vehicle for transporting powder-form, granular and pellet-like material and method for unloading such vehicle**
Fahrzeug für den Transport von pulverförmigem, körnigem oder pelletförmigem Schüttgut sowie Verfahren zum Entladen eines solchen Fahrzeugs
Véhicule pour transporter des matériaux pulvérulents, granulés ou en boulettes et méthode pour décharger un tel véhicule

(43) Date of publication of application: 16.03.1994
(73) Proprietor: Welgro B.V., NL-7141 DC Groenlo (NL)
(72) Inventor: Wellink, Theodorus Antonius, NL-7141 XD Groenlo (NL)
(74) Representative: Konings, Lucien Marie Cornelis Joseph

(56) References cited:
- AU-A- 543 131
- DE-B- 2 645 047
- FR-A- 336 346
- FR-A- 2 372 717

## Description

This invention relates to a method as designated in the preamble of claim 1. The invention further relates to a vehicle as designated in the preamble of claim 2.

Such method and such vehicle are disclosed in FR-A-2 372 717.

The invention has for its object to unload the material more quickly and/or, in the case of granular or pellet-like material, with less damage to the granules or pellets respectively.

To this end the method and vehicle according to the invention have the characteristic of claim 1 and 2 respectively.

DE-B-2 645 047 discloses a plurality of reservoirs being discharged by means of a series of receivers, disposed under funnels of said reservoirs, wherein during unloading of one of said reservoirs an air flow is guided through the discharge pipe and material is added via an opened closing member of the funnel of said one reservoir to this air flow, and wherein the air flow is substantially oriented toward the lower portion of the passage of the receiver outlet. The closing member is constituted by an air guide plate which is displaceable between its closing position and an air guiding position. In the air guiding position this closing member reduces the air flow section, so strongly that another plate must extend vertically into the flow section of the discharge pipe. With such construction of the receiver it is impossible to obtain a great discharge capacity.

FR-336346 discloses a receiver for discharging material wherein only one receiver is present in a discharge pipe being connected to an air unit and wherein the air flow is substantially oriented toward the lower partition the passage of the receiver outlet. This receiver has an inclined air guide surface reducing the air flow section up to 50%. A series of such receivers could not be successively be used in a discharge pipe for discharging a series of reservoirs as they would constitute a great flow resistance.

AU-B-76351/81 discloses a seeder provided with a rotary valve having a plurality of vanes such that the rotation speed of this rotary valve controls the little amount of seeds discharged into the air flow. This publication does not teach a technic of discharging material with the greatest capacity per time unit from a series of reservoirs through a common discharge pipe, but teaches the method of controlled discharge of a little determined amount of seeds from one single reservoir.

Preferred embodiments of the vehicle are designated in the dependent claims.

The invention will be elucidated in the description following hereinafter with reference to a drawing. In the drawing:
Figure 1 shows a side view, partly in lengthwise section, of a vehicle according to the invention;
Figure 2 shows on a larger scale a broken away perspective view of detail II of the vehicle of figure 1;
Figures 3, 4, 5, 8, 9 and 18 show lengthwise sections of embodiment variants of detail III of figure 2;
Figure 6 shows a section along line VI-VI in figure 4;
Figure 7 shows a section along line VII-VII in figure 5;
Figure 10 shows a section along line X-X in figure 9;
Figure 11 shows a view according to arrows XI in figure 9;
Figures 12, 13 and 14 show respectively a side view, front view and top view of a bogie of the vehicle of figure 1, with the understanding that in these figures a butterfly valve is shown as a variant of the closing means;
Figure 15 shows on a larger scale detail XV of figure 12;
Figure 16 shows a section along line XVI-XVI in figure 15;
Figure 17 is a view according to arrows XVII-XVII in figure 15.

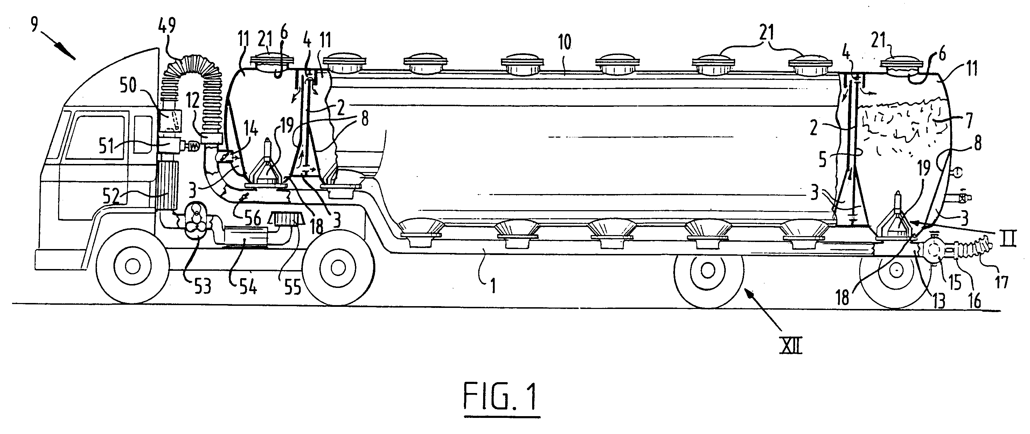

The vehicle 9 of figure 1 carries a tank 10 which is divided into a number of reservoirs 11 each having on their underside a conical discharge funnel 8, the walls of which incline at their lower ends such that the material 7 for unloading slides automatically downward along these walls. Filling openings 6 of reservoirs 11 are closed air-tight by means of covers 21. The reservoirs 11 are mutually separated by transverse partitions 5 and communicate with one another via air passages 4 in the top ends of transverse partitions 5. The spaces 3 of tank 10 beneath discharge funnel 8 communicate with one another and with the upper parts of reservoirs 11 via vertical air pipes 2 and the air passages 4.

Lying beneath discharge funnel 8 is a common discharge pipe 1, the front end of which is formed by a connecting member 12 for compressed air and the rear end of which is formed by a discharge 13 for air with material. Discharge pipe 1 communicates via a conduit 14 with spaces 3. The discharge 13 is connected via a stop valve 15 onto a coupling 16 for a hose 17.

Each funnel 8 is connected via a discharge funnel opening 18 onto the discharge pipe 1. This discharge funnel opening 18 can be closed off by means of a round closing member 19 which seals with a torus-shaped rubber sealing ring 20 against the vertical cylindrical inner face 42 of the flange part 39 of discharge funnel opening 8. The discharge pipe 1 has at the location of each discharge funnel 8 an outflow mouth 36 connected with a flange 37 and bolts 38 to the flange part 39, with interposing of an elastic sealing ring 57.

The closing member 19 is driven up and down by the cylinder rod 61 of a hydraulic or pneumatic cylinder assembly 58, the cylinder 59 of which is attached to the discharge funnel 8.

The connecting device 12 is connected via a hose 49, a non-return valve 50, a safety valve 51 and a damper 52 to a Roots blower 53 or a screw compressor which via a damper 54 and a filter 55 draws in much air and, at a comparatively low pressure of 0.7 to 1.3 atm, delivers 12 to 22 m³ per minute for unloading of 20 to 50 tons of bulk material per hour; this being dependent on the type of material and the carrying height and distance over which the material is transported via hose 17 into a silo. The round discharge pipe 1 has an internal diameter of for example 75 mm to 125 mm and is connected via a butterfly valve 56 to the connecting device 12. After the blower 53 has been set into operation and the spaces 3, the empty reservoirs 11 and the upper parts of the reservoirs 11 still filled with material 7 have been filled with compressed air while stop valve 15 is closed, the closing member 19 of the reservoir 11 for unloading is raised to a height dependent on the length of the hose 17, the carrying height, the specific weight and the nature of the material for unloading, this preferably being done precisely such that there is no danger of hose 17 becoming blocked. The closing member 19 is usually opened to the maximum.

Situated under each discharge funnel 8 is a receiver 65 which in fact forms part of the discharge pipe 1 which receives the material from discharge funnel 8.

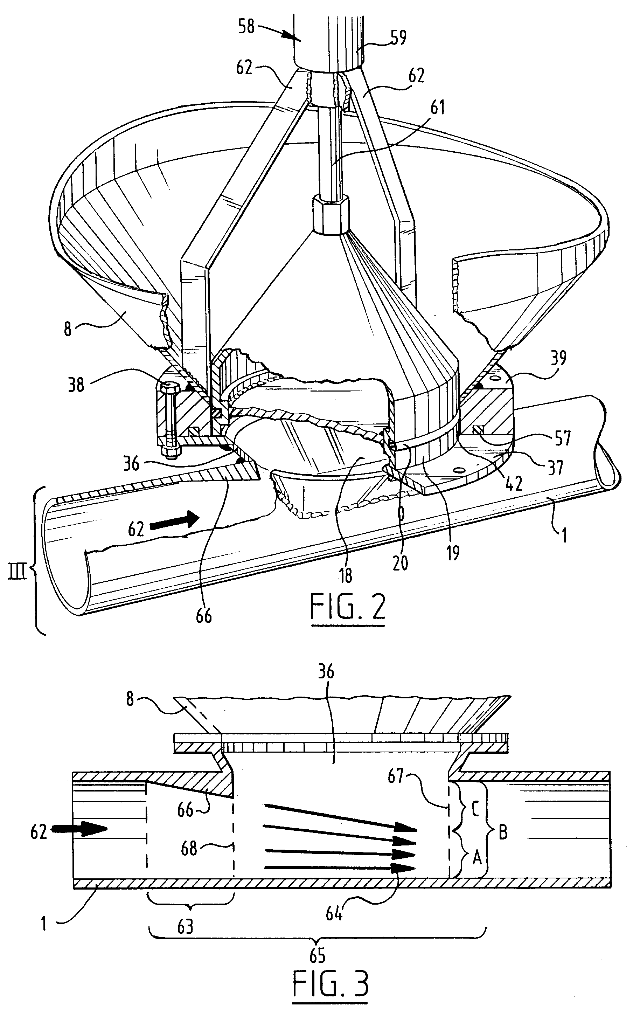

As designated in figure 3, the flow of air possibly containing material already discharged from a discharge funnel 8 located upstream is directed downward according to the invention at the receiver 65 by means of a receiver inlet 63 converging in flow direction 62 and disposed in advance of the outflow mouth 36, which inlet has a downward inclining upper part 66. This air flow is hereby substantially directed as according to arrows 64 toward the lower portion A of the passage B of the receiver outlet 67. Due to the air acceleration in the receiver inlet 63 the air flow fans out to a lesser extent and the granular or pellet-like material possibly already supplied in the air flow at exit plane 68 of the receiver inlet 63 is not caused to swirl about or does so to a lesser extent close to the receiver 65, so that there is less danger of it striking against walls of the outflow mouth 36 and/or the receiver 65 with the risk of self-destruction. In addition the material discharged at this receiver 65 when the closing member 19 is opened can be picked up more easily by the air flow flowing in the discharge tube 1, mainly because it has, as it were, at its disposal the upper part C of passage B of receiver outlet 67 and because due to a higher underpressure realized due to the acceleration the material is sucked to a greater extent out of the discharge funnel 8.

Comparative practical tests have demonstrated that with this method according to the invention the material can be unloaded considerably more quickly. The closing members 19 can be opened very far, that is, usually entirely, without this resulting in blockage of the receiver 65. Unloading can therefore take place practically always at the maximum discharge capacity. Simultaneous transport of different sorts of animal feed in the separate reservoirs is also possible. This vehicle is particularly suitable for transport of breakable animal feed pellets in addition to material in powder form.

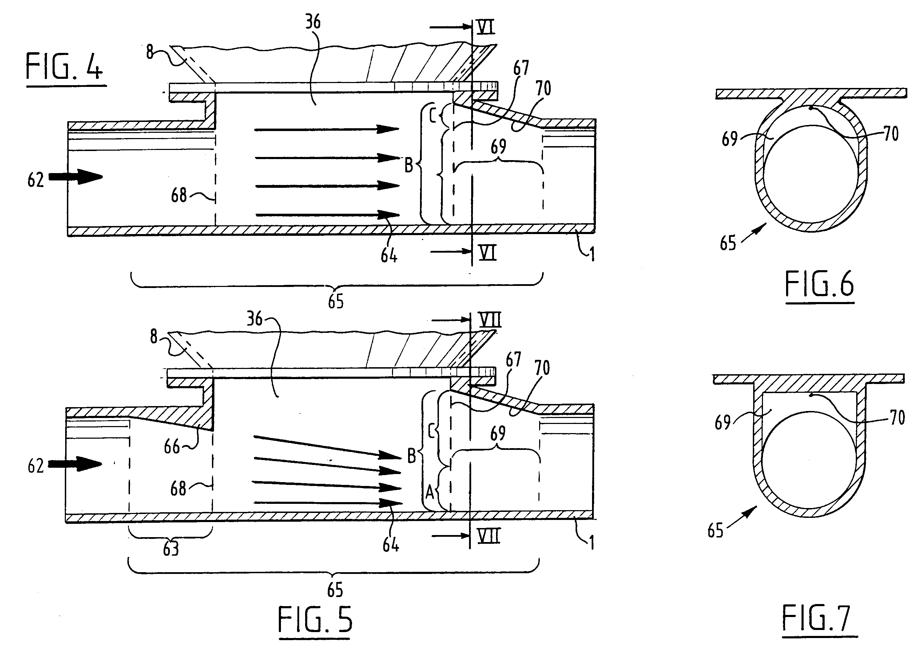

The receiver 65 of figures 4 and 6 is provided with an outlet 69 converging in flow direction and having an arcuate upper surface 70. In this receiver 65 the incoming air flow also flows substantially only into a lower portion A of the passage B of the entrance 67 of the receiver outlet 69 so that a portion C remains which is additionally reserved for inflow of material. It is noted that much material already falls from above into the air flow before it reaches the entrance 67 of the receiver outlet 69.

In this configuration the advantage is also achieved that the flow of air with material discharged upstream passes through the receiver 65 better, that is, with less flow resistance and with less danger of product damage.

In the variant of this receiver 65 of figures 5 and 7 both the feature of the converging inlet 63 and the feature of the converging outlet 69 are applied. It can be seen that the portion C of the passage 67 reserved for received material is enlarged, whereby the action is enhanced with the advantages of the invention. The upper surface 70 is flat in this configuration, which further enlarges portion C. The receiver of figures 4 and 6 can also be improved by use of a flat upper wall 70.

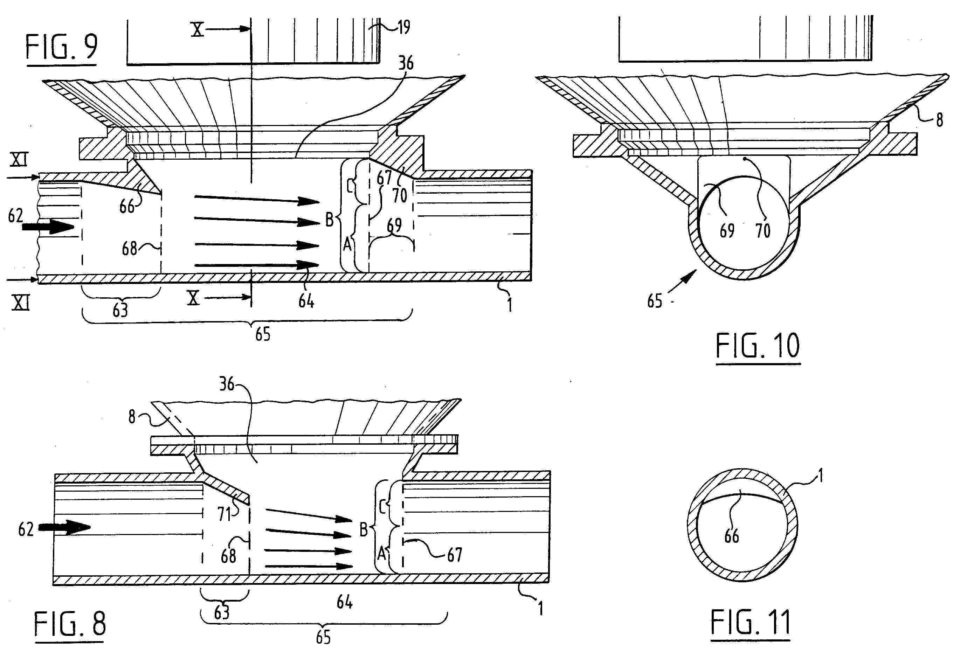

In the variant of the receiver 65 of figure 8 a converging receiver inlet 63 is disposed beneath the outflow mouth 36 in that a downstream and downward oriented plate 71 is present in advance of the exit plane 68 of the receiver inlet 63.

Figures 9-11 show a preferred configuration and dimensioning of the receiver according to the invention in combination with a round funnel outflow mouth 36 which is closed off by a vertically liftable closing member 19.

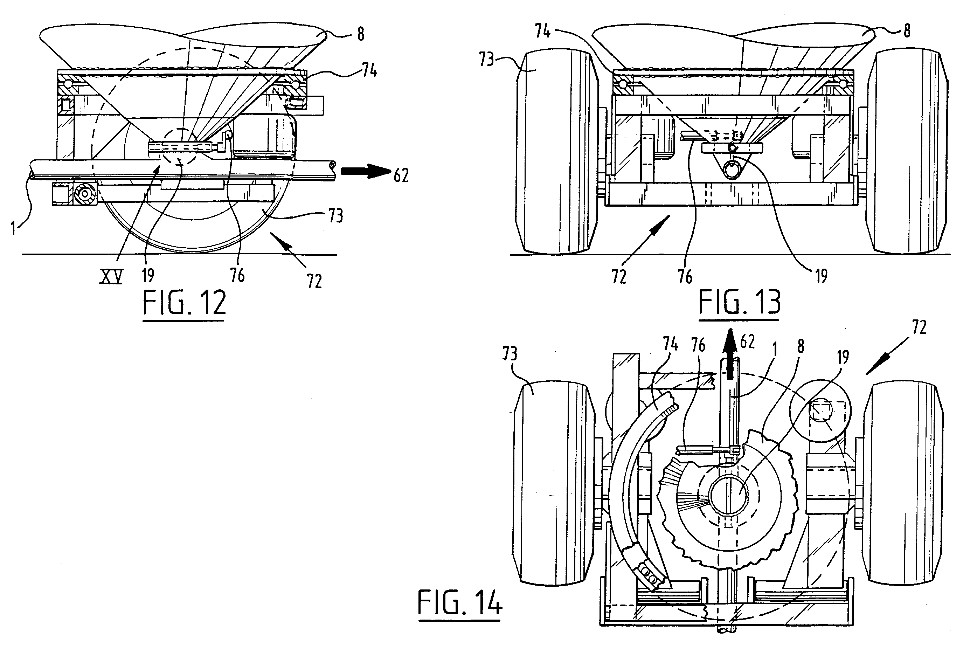

Figures 12-14 show a bogie 72 with two independently sprung wheels 73 which is rotatable about a discharge funnel 8 by means of a rotary crown 74, wherein the discharge pipe 1 protrudes through the bogie 72 at a low level.

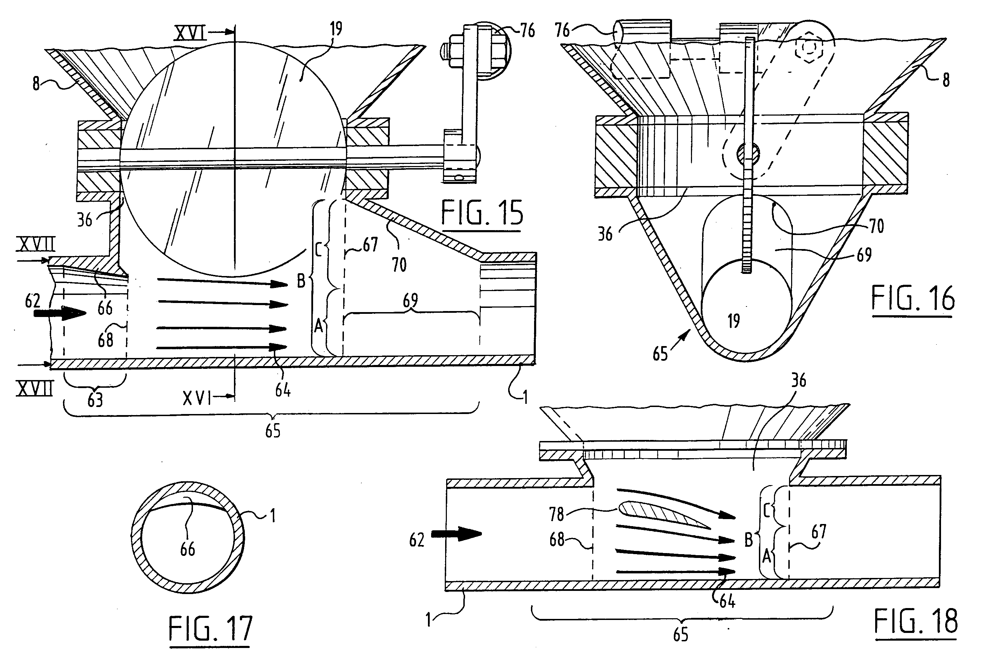

In figures 15-17 the receiver 65 is formed for performing the method according to the invention at a closing member 19 in the form of a butterfly valve actuated by means of a fluid cylinder 76.

The receiver 65 of figure 18 comprises a blade 78 behind the exit plane 68 of the inlet 63 which directs particularly the air arriving in the top of the discharge pipe 1 and accelerated according to arrows 64 slightly downward substantially toward the lower portion A of passage B of receiver outlet 69. The disposition of this blade 78 is possible since the material, such as pellets, possibly taken up into the arriving air is situated substantially in the bottom of the discharge pipe 1. The blade 78 exerts a suction action on the outflow mouth 36.

## Claims

1. Method for unloading a vehicle (9) loaded with powder form, granular and/or pellet-like material, which vehicle (9) has a series of reservoirs (11) being mutually separated by transverse partitions (5) and having filling openings (6), which during unloading are airtight closed by means of covers (21) and discharge funnels (8) each provided with a closing member (19) which is movable between a closed and an opened position, wherein said reservoirs (11) at their undersides are closed by said funnels (8) when having their closing members (19) in closed position, the discharge funnels (8) of said reservoirs (11) constituting a series of discharge funnels (8) which are connected via said closing members (19) to receivers (65) disposed thereunder and arranged in a common discharge pipe (1), wherein during unloading of at least one of said reservoirs (11) an air flow is guided through the discharge pipe (1) and material is added via the opened closing member (19) of its funnel (8) of said one reservoir (11) to this air flow at a receiver (65) placed under said opened closing member (19) and wherein during unloading the space of said one reservoir (11) above the material is maintained under pressure of compressed air,
**characterized in**
that the cross-sectional area of the outlet (69) of at least one receiver (65) is substantially equal to or greater than the cross-sectional area of the discharge pipe 1;
that close to said at least one receiver (65) the air flow possibly containing material is substantially oriented toward the lower portion A of the passage B of the entrance (67) of the receiver outlet (69); and
that the cross-sectional area of said at least one receiver (65) over the total of its length is kept substantially greater than half of the cross-sectional area of the discharge pipe (1).

2. Vehicle (9) for transporting powder form, granular and/or pellet-like material, which vehicle (9) has a series of reservoirs (11) being mutually separated by transverse partitions (5) and having filling openings (6), which during unloading can be airtight closed by means of covers (21) and discharge funnels (8) each provided with a closing member (19) which is movable between a closed and an opened position, wherein said reservoirs (11) at their undersides are closed by said funnels (9) when having their closing members (19) in closed position, the discharge funnels (8) of said reservoirs (11) constituting a series of discharge funnels (8) which are connected via said closing members (19) to receivers (65) disposed thereunder and arranged in a common discharge pipe (1), said vehicle (9) comprising an air unit (53) connected onto said discharge pipe (1) for carrying an air flow through said discharge pipe (1), wherein the spaces of said reservoirs (11) above the material are connected to an air unit (53) supplying compressed air, and wherein material can be added via the opened closing member (19) of the funnel (8) of at least one reservoir (11) to said air flow at a receiver (65) placed under said opened closing member (19),
**characterized in**
that the cross-sectional area of the outlet (69) of at least one receiver (65) is substantially equal to or greater than the cross-sectional area of the discharge pipe (1);
that said at least one receiver (65) is formed such that the air flow possibly containing material is substantially oriented toward the lower portion A of the passage B of the entrance (67) of the receiver outlet (69); and
that the cross-sectional area of said at least one receiver (65) over the total of its length is kept substantially greater than half of the cross-sectional area of the discharge pipe (1).

3. Vehicle (9) as claimed in claim 2, **characterized in that** the cross-sectional area B of the entrance (67) of the receiver outlet (69) is larger than the cross-sectional area of the receiver air inlet (68).

4. Vehicle (9) as claimed in claim 2 or 3, **characterized in that** the receiver outlet (69) converges in downstream direction.

5. Vehicle (9) as claimed in claim 2, 3 or 4, **characterized in that** the receiver (65) has an inlet (63) converging in downstream direction.

6. Vehicle (9) as claimed in claim 5, **characterized in that** said inlet (63) converges due to at least one element (66, 71) located in said inlet (63), said at least one element (66, 71) directing the air flow downward.

7. Vehicle (9) as claimed in any of the claims 2-4, **characterized in that** at least one element (78) directing the air flow downward is present between the receiver air inlet (63) and the receiver outlet (69).

8. Vehicle (9) as claimed in any of the claims 4-7, **characterized in that** the converging outlet (69) is bounded by a substantially flat upper surface (70).

## Patentansprüche

1. Verfahren zum Entladen eines Fahrzeuges (9), das mit pulverförmigem, körnigem und/oder pelletförmigem Material beladen ist, wobei das Fahrzeug (9) eine Reihe von Behältern (11) aufweist, die voneinander durch Querunterteilungen (5) getrennt sind, und Füllöffnungen (6) aufweisen, die während des Beladens mittels Abdeckungen (21) luftdicht geschlossen werden, und Entleerungstrichter (8), von denen jeder mit einem Verschlußteil (19) versehen ist, das zwischen einer geschlossenen und einer offenen Position bewegbar ist, wobei die Behälter (11) an ihrer Unterseite durch die Trichter (8) verschlossen werden, wenn sie ihr Verschlußteil (19) in geschlossener Position enthalten, wobei die Entleerungstrichter (8) der Behälter (11) eine Reihe von Entleerungstrichtern (8) darstellen, die über die Verschlußteile (19) mit Aufnehmern (65) verbunden sind, die darunter vorgesehen sind und in einem gemeinsamen Entleerungsrohr (1) angeordnet sind, wobei während des Entleerens von mindestens einem der Behälter (11) ein Luftstrom durch das Entleerungsrohr (1) geführt wird, und Material über das geöffnete Verschlußteil (19) seines Trichters (8) des einen Behälters (5) zu diesem Luftstrom an einem Aufnehmer (65) zugefügt wird, der unter dem geöffneten Verschlußteil (19) angeordnet ist, und wobei während des Entladens der Raum des einen Behälters (11) oberhalb des Materiales unter Druck von Druckluft gehalten wird,
dadurch gekennzeichnet, daß die Querschnittsfläche des Auslasses (69) des mindestens einen Aufnehmers (65) im wesentlichen gleich oder größer als die Querschnittsfläche des Entleerungsrohres (1) ist;
das nahe dem mindestens einen Aufnehmer (65) der möglicherweise Material enthaltende Luftstrom im wesentlichen zu dem unteren Abschnitt (A) der Passage (B) des Einganges (67) des Aufnehmerauslasses (69) orientiert ist; und
daß die Querschnittsfläche des mindestens einen Aufnehmers (65) über seine gesamte Länge wesentlich größer als die Hälfte der Querschnittsfläche des Entleerungsrohres (1) gehalten wird.

2. Fahrzeug (9) zum Transportieren von pulverförmigem, körnigem und/oder pelletförmigen Material, wobei das Fahrzeug (9) eine Reihe von Behältern (11) aufweist, die von einander durch Querunterteilungen (5) getrennt sind, und Füllöffnungen (6) aufweisen, die während des Entladens luftdicht mittels von Abdeckungen (21) luftdicht geschlossen werden können, und Entleerungstrichter (8), von denen jeder mit einem Verschlußteil (19) versehen ist, das zwischen einer geschlossenen und einer offen Position bewegbar ist, wobei die Behälter (11) an ihren Unterseiten durch die Trichter (8) geschlossen sind, wenn sie ihr Verschlußteil (19) in der geschlossenen Position enthalten, die Entleerungstrichter (8) der Behälter (11) eine Reihe von Entleerungstrichtern (8) darstellen, die über die Verschlußteile (19) mit Aufnehmern (65) verbunden sind, die darunter vorgesehen sind und in einem gemeinsamen Entleerungsrohr (1) angeordnet sind, wobei das Fahrzeug (9) eine Lufteinheit (53) aufweist, die mit dem Entleerungsrohr (1) zum Tragen eines Luftstromes durch das Entleerungsrohr (1) verbunden ist, wobei die Räume der Behälter (11) über dem Material mit einer Lufteinheit (53) verbunden sind, die Druckluft zuführt, und wobei Material über das offene Verschlußteil (19) des Trichters (8) von mindestens einem Behälter (11) zu dem Luftstrom an einem Aufnehmer (19) hinzugeführt werden kann, der unter dem offenen Verschlußteil (19) angeordnet ist,
dadurch gekennzeichnet,
daß die Querschnittsfläche des Auslasses (69) von mindestens einem Aufnehmer (65) im wesentlichen gleich oder größer als die Querschnittsfläche des Entleerungsrohres (1) ist;
daß der mindestens eine Aufnehmer (65) so gebildet ist, daß der möglicherweise Material enthaltende Luftstrom im wesentlichen zu dem unteren Abschnitt (A) der Passage (B) des Einganges (67) des Aufnehmerauslasses (69) orientiert ist; und
daß die Querschnittsfläche des mindestens einen Aufnehmers (65 über seine gesamte Länge wesentlich größer als die Hälfte der Querschnittsfläche des Entleerungsrohr (1) gehalten ist.

3. Fahrzeug (9) nach Anspruch 2, dadurch gekennzeichnet, daß die Querschnittsfläche (B) des Einganges (67) des Aufnehmerauslasses (69) größer als die Querschnittsfläche des Aufnehmerlufteinlasses (68) ist.

4. Fahrzeug (9) nach Anspruch 2 oder 3,
dadurch gekennzeichnet, daß der Aufnehmerauslaß (69) in die stromabwärtige Richtung konvergiert.

5. Fahrzeug (9) nach Anspruch 2, 3 oder 4,
dadurch gekennzeichnet, daß der Aufnehmer (65) einen Einlaß (63) aufweist, der in stromabwärtige Richtung konvergiert.

6. Fahrzeug (9) nach Anspruch 5,
dadurch gekennzeichnet, daß der Einlaß (63) aufgrund mindestens eines Elementes (66, 71) konvergiert, daß in dem Einlaß (63) angeordnet ist, wobei das mindestens eine Element (66, 71) den Luftstrom nach unten richtet.

7. Fahrzeug (9) nach einem der Ansprüche 2 bis 4,
dadurch gekennzeichnet, daß mindestens ein Element (77), das den Luftstrom nach unten richtet, zwischen dem Aufnehmerlufteinlaß (63) und dem Aufnehmerauslaß (69) vorhanden ist.

8. Fahrzeug (9) nach einem der Ansprüche 4 bis 7,
dadurch gekennzeichnet, daß der konvergierende Auslaß (69) durch eine im wesentlichen flache obere Oberfläche (70) abgegrenzt ist.

## Revendications

1. Procédé pour décharger un véhicule (9) chargé à l'aide d'une matière sous forme de poudre, de granulés et/ou de boulettes, lequel véhicule (9) comporte une série de réservoirs (11) séparés mutuellement par des cloisons transversales (5) et ayant des ouvertures de remplissage (6) qui, pendant le déchargement, sont fermées de manière étanche par l'intermédiaire de couvercles (21) et des entonnoirs de décharge (8) munis chacun d'un élément de fermeture (19) qui est mobile entre une position fermée et une position ouverte, dans lequel lesdits réservoirs (11), au niveau de leur côté inférieur, sont fermés par lesdits entonnoirs (8) lorsqu'ils ont leur élément de fermeture (19) situé dans la position fermée, les entonnoirs de décharge (8) desdits réservoirs (11) constituant une série d'entonnoirs de décharge (8) qui sont connectés via lesdits éléments de fermeture (19) à des récepteurs (65) disposés en dessous de ceux-ci et agencés dans un tuyau de décharge commun (1), dans lequel pendant le déchargement d'au moins un premier desdits réservoirs (11), un écoulement d'air est guidé à travers le tuyau de décharge (1) et de la matière est ajoutée à cet écoulement d'air via l'élément de fermeture (19), qui est ouvert, de l'entonnoir (8) dudit premier réservoir (11) au niveau d'un récepteur (65) placé en dessous dudit élément de fermeture (19) ouvert et dans lequel pendant le déchargement l'espace dudit premier réservoir (11) situé au-dessus de la matière est maintenu sous une pression d'air comprimé,
caractérisé en ce que
la surface en coupe transversale de l'orifice de sortie (69) d'au moins un récepteur (65) est pratiquement égale à la surface en coupe transversale du tuyau de décharge (1) ou plus grande que cette dernière,
en ce qu'à proximité dudit au moins un récepteur (65) l'écoulement d'air contenant de manière possible de la matière est pratiquement orienté en direction de la partie inférieure A du passage B de l'entrée (67) de l'orifice de sortie (69) du récepteur, et
en ce que la surface en coupe transversale dudit au moins un récepteur (65) sur la totalité de sa longueur est maintenue nettement supérieure à la moitié de la surface en coupe transversale du tuyau de décharge (1).

2. Véhicule (9) destiné à transporter de la matière sous forme de poudre, de granulés et/ou de boulettes, lequel véhicule (9) comporte une série de réservoirs (11) mutuellement séparés par des cloisons transversales (5) et ayant des ouvertures de remplissage (6) qui, pendant le déchargement, peuvent être fermés de manière étanche par l'intermédiaire de couvercles (21), et des entonnoirs de décharge (8) munis chacun d'un élément de fermeture (19) qui est mobile entre une position fermée et une position ouverte, dans lequel lesdits réservoirs (11) au niveau de leur côté inférieur sont fermés par lesdits entonnoirs (9) lorsque ceux-ci ont leur élément de fermeture (19) dans la position fermée, les entonnoirs de décharge (8) desdits réservoirs (11) constituant une série d'entonnoirs de décharge (8) qui sont reliés via lesdits éléments de fermeture (19) à des récepteurs (65) agencés sous ceux-ci et agencés dans un tuyau de décharge commun (1), ledit véhicule (9) comportant une source d'air (53) reliée audit tuyau de décharge (1) pour transporter un écoulement d'air à travers ledit tuyau de décharge (1), dans lequel les espaces desdits réservoirs (11) situés au-dessus de la matière sont reliés à une source d'air (53) alimentant de l'air comprimé, et dans lequel la matière peut être ajoutée audit écoulement d'air via l'élément de fermeture (19) en position ouverte, de l'entonnoir (8) d'au moins un réservoir (11) au niveau d'un récepteur (65) placé en dessous dudit élément de fermeture (19) ouvert,
caractérisé en ce que
la surface en coupe transversale de l'orifice de sortie (69) d'au moins un récepteur (65) est pratiquement égale à la surface en coupe transversale du tuyau de décharge (1) ou plus grande que celle-ci,
en ce que ledit au moins un récepteur (65) est formé de telle sorte que l'écoulement d'air pouvant contenir de la matière est pratiquement orienté en direction de la partie inférieure A du passage B de l'entrée (67) de l'orifice de sortie (69) du récepteur, et
en ce que la surface en coupe transversale dudit au moins un récepteur (65) sur la totalité de sa longueur est maintenue nettement plus grande que la moitié de la section transversale du tuyau de décharge (1).

3. Véhicule (9) selon la revendication 2, caractérisé en ce que la surface en coupe transversale B de l'entrée (67) de l'orifice de sortie (69) du récepteur est plus grande que la surface en coupe transversale de l'orifice d'entrée d'air (68) du récepteur.

4. Véhicule (9) selon la revendication 2 ou 3, caractérisé en ce que l'orifice de sortie (69) du récepteur converge en direction de l'aval.

5. Véhicule (9) selon la revendication 2, 3 ou 4, caractérisé en ce que le récepteur (65) comporte un orifice d'entrée (63) convergeant en direction de l'aval.

6. Véhicule (9) selon la revendication 5, caractérisé en ce que ledit orifice d'entrée (63) converge du fait qu'au moins un élément (66, 71) est situé dans ledit orifice d'entrée (63), ledit au moins un élément (66, 71) dirigeant l'écoulement d'air vers le bas.

7. Véhicule (9) selon l'une quelconque des revendications 2 à 4, caractérisé en ce qu'au moins un élément (78) dirigeant l'écoulement d'air vers le bas est agencé entre l'orifice d'entrée d'air (63) du récepteur et l'orifice de sortie (69) du récepteur.

8. Véhicule (9) selon l'une quelconque des revendications 4 à 6, caractérisé en ce que l'orifice de sortie (69) convergeant est délimité par une surface supérieure (70) pratiquement plate.
